# EUROPEAN PATENT APPLICATION

(11) **EP 3 470 463 A1**
(43) Date of publication of application: **17.04.2019**
(21) Application number: 17813180.1
(22) Date of filing: 06.06.2017
(51) Int. Cl.: C08L 29/04, C08F 8/14, C08J 5/18, C08K 3/16, C08K 5/057, C08K 5/09, C08K 5/098

(54) **WATER-SOLUBLE COMPOSITION AND CURED PRODUCT THEREOF**

(30) Priority: 14.06.2016 JP 2016118144
(71) Applicant: Adeka Corporation, Tokyo 116-0012 (JP)
(72) Inventor: HARA, Kenji, Tokyo 116-0012 (JP); IRISAWA, Masatomi, Tokyo 116-0012 (JP)
(74) Representative: Gill Jennings & Every LLP
(86) International application number: PCT/JP2017/021034
(87) International publication number: WO 2017/217282

(57) **Abstract**

Provided are: a water-soluble composition which has excellent coatability and exhibits low liquid-crystal contamination and whose cured product has high durability; and a cured product composed of the same. The water-soluble composition contains: an acetoacetate group-containing polyvinyl alcohol (A); and at least one crosslinking agent (B) selected from the group consisting of a zirconium compound (B1) and a titanium compound (B2). The water-soluble composition preferably further contains an organic acid (C), and the polyvinyl alcohol may be a homopolymer or a copolymer, which contains vinyl alcohol as an essential monomer.

## Description

### TECHNICAL FIELD

The present invention relates to a water-soluble composition and a cured product thereof. More particularly, the present invention relates to: a water-soluble composition which has excellent coatability and exhibits low liquid-crystal contamination and whose cured product has high durability; and a cured product composed of the same.

### BACKGROUND ART

Polyvinyl alcohols are used in a variety of applications, such as paints, inks, adhesives and optical films. For example, Patent Document 1 proposes a resin composition having excellent gas barrier properties and water resistance, which contains a resin such as a polyvinyl alcohol, and an organic metal compound such as an organic titanium compound or an organic zirconium compound. Further, Patent Document 2 proposes a heat-sensitive recording material having excellent chemical resistance and sticking properties, which contains an acetoacetyl-modified polyvinyl alcohol and an amino group-containing silane coupling agent as a crosslinking agent. Moreover, Patent Document 3 proposes a method of producing a polyvinyl alcohol-based resin crosslinked material by crosslinking an acetoacetate group-containing polyvinyl alcohol-based resin with a glyoxylate, which crosslinked material shows only minor discoloration caused by ultraviolet radiation with time and has excellent weather resistance.

### RELATED ART DOCUMENTS

### PATENT DOCUMENTS

[Patent Document 1] Japanese Patent No. 4077927
[Patent Document 2] Japanese Patent No. 4943968
[Patent Document 3] Japanese Patent No. 5791415

### SUMMARY OF THE INVENTION

### PROBLEMS TO BE SOLVED BY THE INVENTION

In the use of a polyvinyl alcohol in an optical film, it is necessary to satisfy various physical properties, such as the durability of a cured product, the liquid-crystal contamination resistance and the coatability, at high levels. However, conventional polyvinyl alcohol-containing compositions do not always sufficiently satisfy these physical properties, and a novel composition has thus been desired.

In view of the above, an object of the present invention is to provide: a water-soluble composition which has excellent coatability and exhibits low liquid-crystal contamination and whose cured product has high durability; and a cured product composed of the same.

### MEANS FOR SOLVING THE PROBLEMS

The present inventors intensively studied to solve the above-described problems and consequently discovered that the above-described problems can be solved by adopting the following formulation in a water-soluble composition, thereby completing the present invention.

That is, a water-soluble composition of the present invention is characterized by containing: an acetoacetate group-containing polyvinyl alcohol (A); and at least one crosslinking agent (B) selected from the group consisting of a zirconium compound (B1) and a titanium compound (B2).

It is preferred that the water-soluble composition of the present invention further contains an organic acid (C). In the water-soluble composition of the present invention, the polyvinyl alcohol may be a homopolymer or a copolymer, which contains vinyl alcohol as an essential monomer. In addition, in the water-soluble composition of the present invention, the saponification degree of the acetoacetate group-containing polyvinyl alcohol (A) is preferably 95 or higher. Further, in the water-soluble composition of the present invention, the zirconium compound (B1) is preferably water-soluble zirconium. Still further, in the water-soluble composition of the present invention, the zirconium compound (B1) is preferably oxyhalogenated zirconium, zirconium oxyacetate, zirconium sulfate, or zirconium oxynitrate. Yet still further, in the water-soluble composition of the present invention, the organic acid (C) is preferably lactic acid, acetic acid, citric acid, glycolic acid, or malic acid. Moreover, it is preferred that the water-soluble composition of the present invention further contain a basic compound (D). Furthermore, in the water-soluble composition of the present invention, the metal content is preferably 0.01 to 3% by mass in terms of solid content.

A cured product of the present invention is characterized in that it is obtained from the water-soluble composition of the present invention.

### EFFECTS OF THE INVENTION

According to the present invention, a water-soluble composition which has excellent coatability and exhibits low liquid-crystal contamination and whose cured product has high durability, and a cured product composed of the same can be provided.

### MODE FOR CARRYING OUT THE INVENTION

The water-soluble composition of the present invention and an optical film composed of the water-soluble composition of the present invention will now be described in detail. The water-soluble composition of the present invention is useful as, for example, an optical film for flat panel displays, a coating material of optical films and a sealing agent for liquid-crystal dropping method, and contains: an acetoacetate group-containing polyvinyl alcohol (A) (hereinafter, also referred to as "component (A)"); and at least one crosslinking agent (B) (hereinafter, also referred to as "component (B)") selected from the group consisting of a zirconium compound (B1) and a titanium compound (B2). These components are described below in the order mentioned.

### < Acetoacetate Group-Containing Polyvinyl Alcohol (A) >

The acetoacetate group-containing polyvinyl alcohol (A) according to the present invention is a polyvinyl alcohol having an acetoacetate group on a side chain, and examples of the main chain include, as in conventionally known polyvinyl alcohols: polyvinyl alcohols, partially saponified polyvinyl alcohols and completely saponified polyvinyl alcohols, which are obtained by polymerization of vinyl alcohol, generally referred to as "povals"; and saponified products of copolymers composed of vinyl acetate and a monomer copolymerizable therewith. The polyvinyl alcohol constituting the component (A) may be a homopolymer or a copolymer that contains a vinyl alcohol as an essential monomer.

A method of producing the component (A) is not particularly restricted, and examples thereof include a method of allowing a polyvinyl alcohol to react with diketene, a method of performing transesterification by reaction between a polyvinyl alcohol and an acetoacetic ester, and a method of saponifying a copolymer of vinyl acetate and vinyl acetoacetate. Thereamong, the method of allowing a polyvinyl alcohol to react with diketene is preferable since a good-quality acetoacetate group-containing polyvinyl alcohol can be obtained with a simple production process.

Examples of the monomer copolymerizable with vinyl acetate include unsaturated carboxylic acids, such as maleic acid, maleic anhydride, fumaric acid, crotonic acid, itaconic acid, acrylic acid and methacrylic acid, and esters of these unsaturated carboxylic acids; *α*-olefins, such as ethylene and propylene; allyl sulfonic acid; methallyl sulfonic acid; sodium allylsulfonate; sodium methallylsulfonate; sodium sulfonate; sodium sulfonate monoalkyl maleate; sodium disulfonate alkyl maleate; *N*-methylolacrylamide; acrylamide alkylsulfonate alkali salts; *N*-vinylpyrrolidone; and *N*-vinylpyrrolidone derivatives. These monomers are copolymerized preferably in an amount of 10% by mole or less, particularly 5% by mole, of the total structural unit, and an excessively large amount of these monomers may reduce the solubility in water and impair the compatibility with the crosslinking agent (B).

From the standpoint of improving the water resistance and the film durability, the component (A) preferably has a polystyrene-equivalent weight-average molecular weight (Mw), which is determined by gel permeation chromatography (GPC), of 10,000 to 200,000 and a saponification degree (hydrolysis rate) of 85 to 100, and the saponification degree is more preferably 95 to 100 since the water resistance is further improved.

From the standpoints of the water resistance of the cured product, the crosslinking rate, the solubility in water and the aqueous solution stability, the acetoacetate group content in the component (A) is usually 0.1 to 20% by mole, preferably 0.2 to 15% by mole, particularly preferably 0.3 to 10% by mole.

As the component (A), a commercially available product may be used as well, and examples thereof include GOHSENX™ Z-100, Z-200, Z-220, Z-300 and Z-410 (all of which are manufactured by The Nippon Synthetic Chemical Industry Co., Ltd.).

### < (B) Crosslinking Agent>

The crosslinking agent (B) according to the present invention is at least one selected from a zirconium compound (B1) and a titanium compound (B2), and the water resistance and the heat resistance are improved by allowing the crosslinking agent (B) to react with the acetoacetate group on the side chain of the component (A).

Examples of the zirconium compound (B1) include zirconium halides, such as zirconium oxychloride, zirconium hydroxychloride, zirconium tetrachloride and zirconium bromide; zirconium salts of mineral acids, such as zirconium sulfate, basic zirconium sulfate, zirconium oxynitrate, zirconium oxyacetate and zirconium oxycarbonate; zirconium salts of organic acids, such as zirconium formate, zirconium acetate, zirconium propionate, zirconium caprylate, zirconium stearate, zirconium lactate, zirconium nitrate, zirconium carbonate, zirconium octylate, zirconium citrate and zirconium phosphate; zirconium complex salts, such as ammonium zirconium carbonate, sodium zirconium sulfate, ammonium zirconium acetate, potassium zirconium carbonate, sodium zirconium oxalate, sodium zirconium citrate, ammonium zirconium citrate and zirconium lactate ammonium; and zirconium chelate complexes containing one or more chelating agents as ligands. Thereamong, water-soluble zirconium is preferred, and zirconium oxyhalides, zirconium oxyacetate, zirconium sulfate and zirconium oxynitrate are more preferred.

Examples of the chelating agents include hydroxycarboxylic acids and salts thereof, amino alcohols, amino carboxylic acids, alanine, arginine, leucine, isoleucine, dihydroxypropyl glycine, ethylenediamine tetraacetic acid, diethylenetriamine pentaacetic acid, nitrilotriacetic acid, *β*-diketone, dimethyl glyoxime, citric acid, tartaric acid, maleic acid, polyhydrazide and phosphoric acid esters, and these chelating agents may be used individually, or in combination of two or more thereof.

Examples of the zirconium chelate complexes include zirconium tetraacetylacetonate, zirconium monoacetylacetonate, zirconium bis-acetylacetonate, zirconium monoethylacetoacetate, and zirconium acetate.

Among such zirconium compounds (B1), for example, zirconium tetraacetylacetonate, zirconium monoacetylacetonate, zirconium oxyhalides, zirconium oxynitrate, zirconium lactate ammonium, zirconium sulfate and zirconium oxyacetate are preferred because of their high stability, solubility in water and reactivity. These zirconium compounds may be used individually, or in combination of two or more thereof as a mixture.

As the zirconium compound (B1), a commercially available product can be used as well, and examples thereof include zirconium oxychloride, ZIRCOSOL ZC-2, ZIRCOSOL ZN, ZIRCOSOL HA, ZIRCOSOL AC-7, ZIRCOSOL ZK-10, ZIRCOSOL ZN, ZIRCOSOL ZA-10, ZIRCOSOL ZA-20, zirconyl octylate, and zirconyl carbonate (which are manufactured by Daiichi Kigenso Kagaku Kogyo Co., Ltd.); and ORGATIX ZB-126, ORGATIX ZC-700, ORGATIX ZC-126, and ORGATIX ZC-300 (which are manufactured by Matsumoto Fine Chemical Co., Ltd.).

Examples of the titanium compound (B2) include titanium alkoxides, such as tetramethyl titanate, tetraethyl titanate, tetra-n-propyl titanate, tetraisopropyl titanate, tetra-n-butyl titanate, tetraisobutyl titanate, tetra-t-butyl titanate, tetraoctyl titanate, tetra(2-ethylhexyl) titanate, and tetramethyl titanate; oligomers and polymers that are obtained by hydrolysis reaction of a titanium alkoxide such as a titanium butyl dimer or a titanium butyl tetramer, and derivatives thereof; titanium chelate complexes, such as titanium acetylacetonate, titanium octylene glycolate, titanium tetraacetylacetonate, titanium ethylacetoacetate, titanium triethanol aluminate, and titanium oxalate; titanium acylates, such as polyhydroxytitanium stearate; titanium tetrachloride; titanium lactate; titanium triethanol aminate; and diisopropoxytitanium bis(triethanolaminate), and these titanium compounds may be used individually, or in combination of two or more thereof as a mixture.

As the titanium compound (B2), a commercially available product can be used as well, and examples thereof include ORGATIX TA-10, ORGATIX TC-100, ORGATIX TC-300, ORGATIX TC-310, and ORGATIX TC-315 (which are manufactured by Matsumoto Fine Chemical Co., Ltd.).

As the component (B), a chelate compound having a chelating ligand that can be coordinated bidentate or multidentate by covalent bond, hydrogen bond or the like with respect to a single metal atom can also be used and, by allowing a transition metal compound to have a chelating ligand, the crosslinking reaction rate is appropriately adjusted. Specific examples of the chelating ligand include hydroxycarboxylic acids and salts thereof, aminoalcohols, and *β*-diketones.

In the water-soluble composition of the present invention, a metal component derived from the component (B) is contained, and the metal content in the water-soluble composition is preferably 0.01 to 3% by mass, more preferably 0.1 to 2% by mass, in terms of solid content. The metal content is preferably 0.01 to 3 parts by mass in terms of solid content, since a change such as precipitation or an increase in viscosity does not occur and the water-soluble composition is stable at such a metal content.

### < (C) Organic Acid>

As the organic acid (C), any carboxyl group-containing weakly acidic compound can be used with no particularly restriction, and examples thereof include acetic acid, citric acid, malic acid, glyoxylic acid, glycolic acid, lactic acid, carbonic acid, formic acid, oxalic acid, propionic acid, octylic acid, caprylic acid, glucuronic acid, stearic acid, benzoic acid, and mandelic acid. Thereamong, the organic acid (C) is preferably lactic acid, acetic acid, citric acid, glyoxylic acid, glycolic acid, or malic acid.

It is preferred that the organic acid (C) be contained in an amount of 0.01 to 1 part by mass in terms of solid content with respect to 100 parts by mass of the component (A), since a change such as precipitation, phase separation or an increase in viscosity does not occur at such an amount.

In the water-soluble composition of the present invention, a water-soluble polymer may also be incorporated. Examples of the water-soluble polymer include hydroxypropylcellulose; unmodified polyvinyl alcohols; photosensitive substituent-containing polyvinyl alcohols; polyvinyl alcohol derivatives modified with a silanol group or the like; oxidized starch; etherified, esterified or grafted modified starch; cellulose derivatives, such as gelatin, casein, and carboxymethylcellulose; polyvinylpyrrolidone; water-soluble resins, such as water-soluble polyester resins, water-soluble polyacrylic acid ester resins (e.g., 2-hydroxypropyl acrylate polymers and 4-hydroxybutyl acrylate polymers), water-soluble polycarbonate resins, water-soluble polyvinyl acetate resins, water-soluble styrene acrylate resins, water-soluble vinyltoluene acrylate resins, water-soluble polyurethane resins, water-soluble polyamide resins (e.g., polyvinylamide, polyacrylamide and modified acrylamide), water-soluble urea resins, water-soluble polycaprolactone resins, water-soluble polystyrene resins, water-soluble polyvinyl chloride resins, water-soluble polyacrylate resins and water-soluble polyacrylonitrile resins; styrene-butadiene copolymers; acrylate copolymers; polyvinyl acetates; and ethylene-vinyl acetate copolymers.

As the above-described hydroxypropylcellulose, a commercially available product can be preferably used. Examples thereof include NISSO HPC SSL, NISSO HPC SL, NISSO HPC L, NISSO HPC M, and NISSO HPC H (all of which are manufactured by Nippon Soda Co., Ltd.).

As the above-described polyvinylpyrrolidone, a commercially available product can be preferably used. Examples thereof include POLYVINYLPYRROLIDONE K-30, POLYVINYLPYRROLIDONE K-85, and POLYVINYLPYRROLIDONE K-90 (all of which are manufactured by Nippon Shokubai Co., Ltd.); and PITZCOL K-30, PITZCOL K-50, PITZCOL K-80, PITZCOL K-85, and PITZCOL K-90 (all of which are manufactured by DKS Co., Ltd.).

To the water-soluble composition of the present invention, as required, a coupling agent, a sensitizer, a surfactant and the like may be added as well.

Examples of the coupling agent that can be used include alkyl functional alkoxysilanes, such as dimethyldimethoxysilane, dimethyldiethoxysilane, methylethyldimethoxysilane, methylethyldiethoxysilane, methyltrimethoxysilane, methyltriethoxysilane, ethyltrimethoxysilane, and ethyltrimethoxysilane; alkenyl functional alkoxysilanes, such as vinyltrichlorosilane, vinyltrimethoxysilane, vinyltriethoxysilane, and allyltrimethoxysilane; epoxy functional alkoxysilanes, such as 3-methacryloxypropyltriethoxysilane, 3-methacryloxypropyltrimethoxysilane, 3-methacryloxypropylmethyldiethoxysilane, 3-methacryloxypropylmethyldimethoxysilane, 2-methacryloxypropyltrimethoxysilane, *γ*-glycidoxypropyltrimethoxysilane, *γ*-glycidoxypropylmethyldiethoxysilane, and *β*-(3,4-epoxycyclohexyl)ethyltrimethoxysilane; amino functional alkoxysilanes, such as *N*-*β*(aminoethyl)-*γ*-aminopropyltrimethoxysilane, *γ*-aminopropyltriethoxysilane, and *N*-phenyl-*γ*-aminopropyltrimethoxysilane; mercapto functional alkoxysilanes, such as *γ*-mercaptopropyltrimethoxysilane; titanium alkoxides, such as titanium tetraisopropoxide and titanium tetra-*n*-butoxide; titanium chelates, such as titanium dioctyloxy-bis(octylene glycolate) and titanium diisopropoxy-bis(ethylacetoacetate); zirconium chelates, such as zirconium tetraacetyl acetonate and zirconium tributoxymonoacetyl acetonate; zirconium acylates, such as zirconium tributoxy monostearate; and isocyanate silanes, such as methyltriisocyanate silane.

The sensitizer is a compound capable of expanding the applicable wavelength range of light when curing is performed by light irradiation, and examples thereof include benzophenones, such as benzophenone, 3-hydroxybenzophenone, 4-hydroxybenzophenone, 4,4-dihydroxybenzophenone, 2-methylbenzophenone, 3-methylbenzophenone, 4-methylbenzophenone, 2,5-dimethylbenzophenone, 3,4-dimethylbenzophenone, 4-methoxybenzophenone, 4,4-dimethoxybenzophenone, 3,3-dimethyl-4-methoxybenzophenone, and 4-phenylbenzophenone; acetophenones, such as acetophenone, 4-methoxyacetophenone, 2,4-dimethoxyacetophenone, 2,5-dimethoxyacetophenone, 2,6-dimethoxyacetophenone, 4,4-dimethoxyacetophenone, 4-ethoxyacetophenone, diethoxyacetophenone, 2,2-diethoxyacetophenone, 2-ethoxy-2-phenylacetophenone, and 4-phenylacetophenone; anthraquinones, such as anthraquinone, hydroxyanthraquinone, 1-nitroanthraquinone, aminoanthraquinone, 2-chloroanthraquinone, 2-methylanthraquinone, 2-ethylanthraquinone, anthraquinone sulfonic acid, 1,2-benzanthraquinone, and 1,4-hydroxyanthraquinone (quinizarin); anthracenes, such as anthracene, 1,2-benzanthracene, 9-cyanoanthracene, 9,10-dicyanoanthracene, 2-ethyl-9,10-dimethoxyanthracene, and 9,10-bis(phenylethyl)anthracene; quinones, such as 2,3-dichloro-6-dicyano-*p*-benzoquinone, 2,3-dimethoxy-5-methyl-1,4-benzoquinone, methoxybenzoquinone, 2,5-dichloro-*p*-benzoquinone, 2,6-dimethyl-1,4-benzoquinone, 9,10-phenanthrenequinone, camphorquinone, 2,3-dichloro-1,4-naphthoquinone, and xanthone; thioxanthones, such as thioxanthone, 2-methylthioxanthone, 2,4-dimethylthioxanthone, isopropylthioxanthone, 2,4-diethylthioxanthone, and 2,4-isopropylthioxanthone; cycloheptanes, such as dibenzosuberone, dibenzosuberenone, dibenzosuberenol, and dibenzosuberane; aromatic compounds, such as 2-methoxynaphthalene, benzoin isopropyl ether, 4-benzoyldiphenyl, o-benzoyl benzoate, methyl o-benzoylbenzoate, 4-benzoyl-4-methyl-diphenyl sulfide, benzyl, and benzoin methyl ether; and coumarin-based, thiazine-based, azine-based, acridine-based, and xanthene-based compounds that are dye-based sensitizing substances.

Examples of the surfactant include fluorine surfactants, such as perfluoroalkyl phosphates and perfluoroalkyl carboxylates; anionic surfactants, such as higher fatty acid alkali salts, alkyl sulfonates, and alkyl sulfates; cationic surfactants, such as higher amine halogen acid salts and quaternary ammonium salts; nonionic surfactants, such as polyethylene glycol alkyl ethers, polyethylene glycol fatty acid esters, sorbitan fatty acid esters, and fatty acid monoglycerides; amphoteric surfactants; and silicone-based surfactants, and these surfactants may be used in combination as well.

Further, in the water-soluble composition of the present invention, as required, a basic compound (D) may also be incorporated for the purposes of pH adjustment and the like.

Examples of the basic compound (D) include ammonia, sodium hydroxide, potassium hydroxide, triethylamine, triethanolamine, diethanolamine, monoethanolamine, triisopropanolamine, diisopropanolamine, monoisopropanolamine, *N*,*N*-dimethylethanolamine, ethylene imine, pyridine, pyrrolidine, piperidine, polyethyleneimine and tetramethylammonium hydroxide, and these basic compounds may be used individually, or in combination of two or more thereof. When a polyethyleneimine is used as the basic compound (D), since the adhesion of the water-soluble composition to a substrate is improved, so that it can be particularly preferably utilized in the applications such as adhesives, inks, paints and tackifiers.

Moreover, by adding the basic compound (D) to the water-soluble composition, changes in the physical properties of the water-soluble composition due to thickening can be reduced and thereby the stability is improved, which is preferable.

As the above-described polyethyleneimine, a commercially available product can be preferably used, and examples thereof include EPOMIN SP-003, EPOMIN SP-006, EPOMIN SP-012, EPOMIN SP-018, EPOMIN SP-200 and EPOMIN SP-P-1000, which are manufactured by Nippon Shokubai Co., Ltd.; and POLYETHYLENEIMINE 300, POLYETHYLENEIMINE 600, POLYETHYLENEIMINE 1200, POLYETHYLENEIMINE 1800, POLYETHYLENEIMINE 10000 and POLYETHYLENEIMINE 70000, which are manufactured by Junsei Chemical Co., Ltd.

When the water-soluble composition of the present invention contains the component (D), the content of the component (D) in the water-soluble composition is preferably 0.001 to 3% by mass, more preferably 0.005 to 1% by mass, in terms of solid content.

Further, in the water-soluble composition of the present invention, as long as the effects of the present invention are not impaired, a variety of resin additives and the like, such as a photopolymerization initiator, a thermal polymerization initiator, a photobase initiator, an inorganic filler, an organic filler, a colorant (e.g., a pigment or a dye), an anti-foaming agent, a thickening agent, a leveling agent, an organic metal coupling agent, a thixotropic agent, a carbon compound, metal fine particles, a metal oxide, a flame retardant, a plasticizer, a light stabilizer, a heat stabilizer, an age inhibitor, elastomer particles, a chain transfer agent, a polymerization inhibitor, an ultraviolet absorber, an antioxidant, an antistatic agent, a mold-release agent, a flow modifier, an adhesion-promoting agent, an unsaturated monomer, a cationically polymerizable compound (e.g., an epoxy compound, an oxetane compound or vinyl ether), a water-soluble preservative and an organic acid salt may also be incorporated as required.

As the photopolymerization initiator, a conventionally known compound can be used, and examples thereof include those described in Japanese Unexamined Patent Application Publication Nos. H6-228218, 2009-102455, 2012-007071, H06-239910, 2003-192712 and 2016-185929 and WO2014/050551, as well as hydrogen abstraction-type photopolymerization initiators (e.g., benzophenone, thioxanthone, 1-chloro-4-propoxythioxanthone, isopropylthioxanthone, diethylthioxanthone and ethylanthraquinone), phenyl biphenyl ketone, 1-hydroxy-1-benzoylcyclohexane (a-hydroxyalkylphenone), benzoin, benzyl dimethyl ketal, 1-benzyl-1-dimethylamino-1-(4'-morpholinobenzoyl)propane, 2-morpholyl-2-(4'-methylmercapto)benzoylpropane, 4-benzoyl-4'-methyldiphenyl sulfide, benzoin butyl ether, 2-hydroxy-2-benzoylpropane, 2-hydroxy-2-(4'-isopropyl)benzoylpropane, 4-butylbenzoyltrichloromethane, 4-phenoxybenzoyldichloromethane, methyl benzoylformate, 1-hydroxy-cyclohexyl-phenyl-ketone, 2-hydroxy-2-methyl-1-phenyl-propane-1-one, 1-[4-(2-hydroxyethoxy)-phenyl]-2-hydroxy-2-methyl-1-propane-1-one, 1,7-bis(9'-acridinyl)heptane, 9-*n*-butyl-3,6-bis(2'-morpholinoisobutyroyl)carbazole, 2-methyl-4,6-bis(trichloromethyl)-*s*-triazine, 2-phenyl-4,6-bis(trichloromethyl)-*s*-triazine, 2-naphthyl-4,6-bis(trichloromethyl)-*s*-triazine, 2,2-bis(2-chlorophenyl)-4,5,4',5'-tetraphenyl-1-2'-biimidazole and acylphosphinates, among which acylphosphinates are particularly preferred because of their solubility in water and reactivity.

Among the above-described photolytic photopolymerization initiators, for example, water-soluble initiators such as Irg 2959 and Irg 819DW (which are manufactured by BASF Japan, Ltd.) as well as ESACURE ONE, ESACURE 1001M, ESACURE KIP 150 and ESACURE DP 250 (which are manufactured by Lamberti S.p.A) are preferred because of their high affinity for water.

As the above-described colorant, a pigment or a dye can be used. The pigment or the dye can each be an inorganic or organic color material, and such color materials may be used individually, or in combination of two or more thereof. The term "pigment" used herein refers to the below-described colorants insoluble in solvents and also encompasses inorganic and organic color materials that are insoluble in solvents, as well as laked inorganic and organic dyes.

Examples of the pigment include carbon blacks, such as those obtained by a furnace process, a channel process or a thermal process; carbon blacks, such as acetylene black, Ketjen black, and lamp black; those in which the above-described carbon blacks are adjusted or coated with an epoxy resin; those in which the above-described carbon blacks are dispersed in a solvent together with a resin in advance and thereby coated with 20 to 200 mg/g of the resin; those in which the above-described carbon blacks are subjected to a surface treatment with an acid or an alkali; carbon blacks having an average particle size of 8 nm or greater and a DBP oil absorption of 90 ml/100 g or less; carbon blacks having a total oxygen content, which is calculated from the CO and CO₂ content in the volatile component at 950°C, of not less than 9 mg per 100 m² of the surface area; graphitized carbon blacks; graphite; activated carbons; carbon fibers; carbon nanotubes; carbon microcoils; carbon nanohorns; carbon aerogels; fullerene; black pigments represented by aniline black, PIGMENT BLACK 7 and titanium black; and organic and inorganic pigments, such as chromium oxide green, Milori blue, cobalt green, cobalt blue, manganese-based pigments, ferrocyanides, phosphate ultramarine blue, Prussian blue, ultramarine, cerulean blue, viridian, emerald green, lead sulfate, lead yellow, zinc yellow, Indian red (red iron (III) oxide), cadmium red, synthetic iron black, amber and lake pigments. Thereamong, it is preferred to use a black pigment because of its high light-shielding property, and it is more preferred to use a carbon black as a black pigment.

As the pigment, a commercially available pigment can be used as well, and examples thereof include MICROPIGMO WMYW-5, MICROPIGMO WMRD-5, MICROPIGMO WMBN-5, MICROPIGMO WMGN-5, MICROPIGMO WMBK-5, MICROPIGMO WMBE-5, MICROPIGMO WMVT-5, MICROPIGMO WMWE-1 and BONJET BLACK CW-1 (all of which are manufactured by Orient Chemical Industries Co., Ltd.); PIGMENT RED 1, 2, 3, 9, 10, 14, 17, 22, 23, 31, 38, 41, 48, 49, 88, 90, 97, 112, 119, 122, 123, 144, 149, 166, 168, 169, 170, 171, 177, 179, 180, 184, 185, 192, 200, 202, 209, 215, 216, 217, 220, 223, 224, 226, 227, 254, 228, 240 and 254; PIGMENT ORANGE 13, 31, 34, 36, 38, 43, 46, 48, 49, 51, 52, 55, 59, 60, 61, 62, 64, 65 and 71; PIGMENT YELLOW 1, 3, 12, 13, 14, 16, 17, 20, 24, 55, 60, 73, 81, 83, 86, 93, 95, 97, 98, 100, 109, 110, 113, 114, 117, 120, 125, 126, 127, 129, 137, 138, 139, 147, 148, 150, 151, 152, 153, 154, 166, 168, 175, 180 and 185; PIGMENT GREEN 7, 10, 36 and 58; PIGMENT BLUE 15, 15:1, 15:2, 15:3, 15:4, 15:5, 15:6, 22, 24, 56, 60, 61, 62 and 64; and PIGMENT VIOLET 1, 19, 23, 27, 29, 30, 32, 37, 40 and 50.

Examples of the dye include metal complex compounds such as nitroso compounds, nitro compounds, azo compounds, diazo compounds, xanthene compounds, quinoline compounds, anthraquinone compounds, coumarin compounds, cyanine compounds, phthalocyanine compounds, isoindolinone compounds, isoindoline compounds, quinacridone compounds, anthanthrone compounds, perinone compounds, perylene compounds, diketopyrrolopyrrole compounds, thioindigo compounds, dioxazine compounds, triphenylmethane compounds, quinophthalone compounds, naphthalene tetracarboxylic acids, azo dyes, and cyanine dyes. As the dye, a water-soluble dye or an oil-soluble dye can be used as appropriate.

As the dye, a commercially available pigment can be used as well, and examples thereof include WATER YELLOW 1, WATER YELLOW 2, WATER YELLOW 6C, WATER YELLOW 6CL, WATER ORANGE 18, WATER ORANGE 25, WATER RED 1, WATER RED 2S, WATER RED 3, WATER RED 9, WATER RED 27, WATER PINK 2S, WATER BROWN 16, WATER GREEN 8, WATER BLUE 3, WATER BLUE 9, WATER BLUE 105S, WATER BLUE 106, WATER BLUE 117-L, WATER VIOLET 7, WATER BLACK 31, WATER BLACK 191-L, WATER BLACK 256-L, WATER BLACK R-455, WATER BLACK R-510, BONJET YELLOW 161-L, BONJET MAGENTA XXX, BONJET CYAN XXX, BONJET BLACK 891-L, VALIFAST YELLOW 1101, VALIFAST YELLOW 3150, VALIFAST RED 1308, VALIFAST RED 2320, VALIFAST PINK 1364, VALIFAST PINK 2310N, VALIFAST VIOLET 1701, VALIFAST BLACK 1815, VALIFAST BLACK 1807, VALIFAST BLACK 3804, VALIFAST BLACK 3810, VALIFAST BLACK 3820, VALIFAST BLACK 3830, VALIFAST BLACK 3840, VALIFAST BLACK 3866, VALIFAST BLACK 3870, VALIFAST ORANGE 2210, VALIFAST BROWN 3402, VALIFAST BLUE 1613 and VALIFAST BLUE 1605 (all of which are manufactured by Orient Chemical Industries Co., Ltd.); ACID GREEN 1, ACID GREEN 3, ACID GREEN 5, ACID GREEN 9, ACID GREEN 27, ACID GREEN 50, ACID GREEN A, ALIZARIN CYANIN GREEN F, BASIC GREEN 1, BASIC GREEN 5, BROMOCRESOL GREEN, BROMOCRESOL GREEN Sodium Salt, ERIO GREEN B, FAST GREEN FCF, FITER BLUE GREEN Sodium Salt, INDOCYANINE GREEN, JANUS GREEN B, LEUCO MALACHITE GREEN, MALACHITE GREEN, OXALATE, METHYL GREEN, PALATINE CHROME GREEN, QUINIZARIN GREEN SS, ACID RED 1, ACID RED 9, ACID RED 13, ACID RED 18, ACID RED 26, ACID RED 27, ACID RED 52, ACID RED 87, ACID RED 88, ACID RED 91, ACID RED 92, ACID RED 94, ACID RED 112, ACID RED 114, ACID RED 151, ACID RED 289, ALIZARIN, ALLURA RED AC, ASTRAZON RED 6B, AZO RUBINE, BASIC RED 5, BENZOPURPURINE 4B, BORDEZUX RED, CHLORANTINE FAST RED 5B, CHROMOTROPE 2B, CHROMOTROPE 2R, CONGO RED, CRESOL RED, CREZOL RED Sodium Salt, CROCEIN SCARLET 3B, DIRECT FAST RED 3B, DIRECT RED 80, DIRECT SCARLET B, ERIOCHROME RED B, 4-ethoxychrysoidine hydrochloride, ETHYL RED, FAST RED B Salt, FAST RED ITR Base, LAKE RED CBA, LITHOL RUBIN BCA, METHOXY RED, METHYL RED, METHYL RED Sodium Salt, ORALITH BRILLIANT PINK R, PARA RED, PHENOL RED Sodium Salt, PIGMENT RED, PIGMENT RED 254, RHODAMINE 6G, SUDAN II, SUDAN III, SUDAN R, 2,3,5-triphenyltetrazolium chloride, ACID BLACK 1, ACID BLUE 1, ACID BLUE 9, ACID BLUE 92, ACID BLUE 3 Sodium Salt, ACID RED 91, AZO BLUE, BASIC BLUE 1, BASIC BLUE 7, BASIC BLUE 12, BASIC BLUE 17, BASIC BLUE 24, BASIC BLUE 26, BRILLIANT BLUE G, BRILLIANT BLUE R, BROMOCRESOL BLUE, BROMOPHENOL BLUE, BROMOTHYMOL BLUE, CHROME PURE BLUE BX, COOMASSIE BRILLIANT BLUE G-250, COOMASSIE BRILLIANT BLUE R-250, DIRECT BLUE 1, DIRECT BLUE 2, DIRECT BLUE 14, DIRECT SKY BLUE, DISPERSE BLUE 14, ERIOCHROME BLUE BLACK B, ERIOCHROME CYANINE R, EVANS BLUE, FILTER BLUE GREEN Sodium Salt, INDIGO CARMINE, INDIGO, METHYLENE BLUE HYDRATE, MORDANT BLACK 17, MORDANT BLUE 13, MORDANT BLUE 29, OMEGA CHROME BLACK BLUE G, PIGMENT BLUE 15, QUINIZARIN BLUE, SUDAN BLUE, THYMOL BLUE, XYLENE CYANOL FF, ACID ORANGE 5, ACID ORANGE 7, 1-amino-2-methylanthraquione, ASTRAZON ORANGE R, BASIC ORANGE 14, CROCEIN ORANGE G, ETHYL ORANGE, METHYL ORANGE, MORDANT ORANGE 1, *α*-NAPHTHOL ORANGE, OIL ORANGE, ORANGE G, PERMANENT ORANGE, PYRAZOLONE ORANGE, SUDAN I and SUDAN II (all of which are manufactured by Tokyo Chemical Industry Co., Ltd.).

As the above-described unsaturated monomer, an alkylene oxide-modified (meth)acrylate compound or a (meth)acrylamide compound, which is represented by the following Formula (I), can be particularly preferably used.

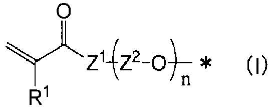

The term "alkylene oxide-modified (meth)acrylate compound" means an alkylene oxide-modified acrylate compound or an alkylene oxide-modified methacrylate compound.

The term "(meth)acrylamide compound" means an acrylamide compound or a methacrylamide compound.

The alkylene oxide-modified acrylate compound is a compound represented by Formula (I) wherein R¹ is a hydrogen atom, Z¹ is an oxygen atom and n is 1 to 30, and the alkylene oxide-modified methacrylate compound is a compound represented by Formula (I) wherein R¹ is a methyl group, Z¹ is an oxygen atom and n is 1 to 30.

Examples of the alkylene oxide-modified acrylate compound include diethylene oxide-modified neopentyl glycol diacrylate, dipropylene oxide-modified neopentyl glycol diacrylate, diethylene oxide-modified 1,6-hexanediol diacrylate and dipropylene oxide-modified 1,6-hexanediol diacrylate, and examples of the alkylene oxide-modified methacrylate compound include diethylene oxide-modified neopentyl glycol dimethacrylate, dipropylene oxide-modified neopentyl glycol dimethacrylate, diethylene oxide-modified 1,6-hexanediol dimethacrylate and dipropylene oxide-modified 1,6-hexanediol dimethacrylate.

As the alkylene oxide-modified acrylate compound and the alkylene oxide-modified methacrylate compound, commercially available products can be preferably used as well, and examples thereof include NK ESTER A-600, A-GLY-20E, and NK ECONOMER A-PG5054E (all of which are manufactured by Shin Nakamura Chemical Co., Ltd.).

Among the above-exemplified alkylene oxide-modified acrylate compounds and alkylene oxide-modified methacrylate compounds, those in which Z² of Formula (I) is an ethylene group or a propylene group are preferred because of their excellent solubility in water, and those in which Z² of Formula (I) is an ethylene group are more preferred because of their particularly excellent solubility in water.

When the alkylene oxide-modified acrylate compound and the alkylene oxide-modified methacrylate compound contain a single group represented by Formula (I), n is particularly preferably 6 or larger from the standpoint of attaining excellent solubility in water. When the alkylene oxide-modified acrylate compound and the alkylene oxide-modified methacrylate compound contain plural groups represented by Formula (I), the sum of the values of n existing in a plural number is particularly preferably 10 or larger.

The above-described acrylamide compound is a compound represented by Formula (I) wherein R¹ is a hydrogen atom, Z¹ is NR²- and n is 0, and the above-described methacrylamide compound is a compound represented by the above-described Formula (I) wherein R¹ is a methyl group, Z¹ is NR²- and n is 0.

Examples of the acrylamide compound include hydroxyacrylamide, *N*-methylacrylamide, *N*-ethylacrylamide, *N*-isopropylacrylamide, *N*-butylacrylamide, diacetone acrylamide, *N*,*N*-dimethylacrylamide, *N*,*N*-diethylacrylamide, *N*,*N*-dipropylacrylamide, acryloylmorpholine, *N*-*n*-butoxymethylacrylamide, *N*-isobutoxymethylacrylamide and *N*-methoxymethylacrylamide, and examples of the methacrylamide compound include hydroxymethacrylamide, *N*-methylmethacrylamide, *N*-ethylmethacrylamide, *N*-isopropylmethacrylamide, *N*-butylmethacrylamide, diacetone methacrylamide, *N*,*N*-dimethylmethacrylamide, *N*,*N*-diethylmethacrylamide, *N*,*N*-dipropylmethacrylamide, methacryloylmorpholine, *N*-*n*-butoxymethylmethacrylamide, *N*-isobutoxymethylmethacrylamide and *N*-methoxymethylmethacrylamide.

As the acrylamide compound and the methacrylamide compound, commercially available products can be preferably used as well, and examples thereof include FFM-2, FFM-3, FFM-4, and FFM-5 (which are manufactured by FUJIFILM Corporation).

The above-described water-soluble preservative refers to a preservative that is highly soluble in water and has a solubility of 1% or higher at room temperature, and specific examples thereof include methylparaben, benzoic acid, benzoates, salicylic acid, salicylates, phenoxyethanol, water-soluble cationic antibacterial agents, organic sulfur compounds, halogenated compounds, cyclic organic nitrogen compounds, low-molecular-weight aldehydes, paraben, propanediol substance, isothiazolinone, quaternary compounds, benzoates, low-molecular-weight alcohols, dehydroacetic acid, ACQ (copper-quaternary ammonium compounds), CUAZ (copper-azole compounds), AAQ (quaternary ammonium compounds), sodium bisulfite, sodium hydrogen sulfate, sodium thiosulfate, ascorbates, benzalkonium chloride, chlorobutanol, thimerosal, phenylmercuric acetate, phenylmercuric borate, phenylmercuric nitrate, paraben, methylparaben, polyvinyl alcohol, benzyl alcohol, isothiazolone, triazine, bronopol, thiabendazole, zinc pyrithione, carbendazim, pyridine oxide thiol sodium salt, and phenylethanol.

As the water-soluble preservative, a commercially available product can be used as well, and examples thereof include SAN-AI BAC P, SAN-AI BAC 300K, SAN-AI BAC IT-15SA, SAN-AI BAC AS-30, SAN-AI BAC T-10, SAN-AI BAC M-30, and SAN-AI BAC Sodium Omadine (all of which are manufactured by SAN-AI OIL Co., Ltd.).

The water-soluble composition of the present invention to which the above-described photopolymerization initiator and unsaturated monomer are added is particularly preferred since it is highly reactive and exhibits improved weather resistance and the like in terms of film hardness, moist-heat resistance and the like.

The above-described organic acid salt may be any organic acid salt and is not particularly restricted; however, it is preferably a salt of one of the organic acids exemplified for the organic acid (C).

The water-soluble composition of the present invention is preferably a one-pack liquid that contains water as a solvent without containing any organic solvent.

The water-soluble composition of the present invention can be applied onto a support substrate made of glass, metal, paper, plastic or the like using a known means, such as a spin coater, a bar coater or a roll coater, a curtain coater, or various printing or immersion means. Further, after once coating the water-soluble composition of the present invention on a support substrate such as a film, the resultant can be transferred onto another support substrate, and the method thereof is not restricted.

Examples of the material of a transparent support include inorganic materials such as glass; cellulose esters, such as diacetyl cellulose, triacetyl cellulose (TAC), propionyl cellulose, butyryl cellulose, acetylpropionyl cellulose, and nitrocellulose; polyamides; polycarbonates; polyesters, such as polyethylene terephthalate, polyethylene naphthalate, polybutylene terephthalate, poly-1,4-cyclohexane dimethylene terephthalate, polyethylene-1,2-diphenoxyethane-4,4'-dicarboxylate, and polybutylene terephthalate; polystyrenes; polyolefins, such as polyethylenes, polypropylenes, and polymethylpentenes; acrylic resins such as polymethyl methacrylate; polycarbonates; polysulfones; polyether sulfones; polyether ketones; polyether imides; and polymeric materials, such as polyoxyethylenes and norbornene resins. The transmittance of the transparent support is preferably 80% or higher, more preferably 86% or higher. The haze is preferably 2% or less, more preferably 1% or less. The refractive index is preferably 1.45 to 1.70.

When the water-soluble composition of the present invention is coated on a transparent support and subsequently irradiated with light, the irradiation conditions, such as the wavelength and the intensity of the light to be irradiated and the irradiation time, may be adjusted as appropriate in accordance with the activity of a photoinitiator, the activity of a photopolymerizable resin to be used and the like; however, as for the wavelength of the light, usually, in order to allow the light to sufficiently penetrate into the inside, the light has a wavelength peak of preferably 350 to 400 nm, more preferably 360 to 380 nm. Further, the intensity of the light is preferably 10 to 300 mW/cm², more preferably 25 to 100 mW/cm², and the irradiation time is preferably 5 to 500 seconds, more preferably 10 to 300 seconds.

After coating the water-soluble composition of the present invention on the transparent support, the resultant may be heated to allow crosslinking reaction to proceed. The heating is performed at 50 to 200°C, preferably 70 to 150°C, for 10 mins to 1 hour. When the temperature is lower than 50°C, the crosslinking reaction may not proceed in some cases, while when the temperature is higher than 200°C, the component (A) may be degraded and/or the transparency of the resulting optical film may be deteriorated.

Examples of the concrete use of a cured product of the water-soluble composition of the present invention include optical materials represented by eyeglasses and imaging lenses; paints; fiber dyes; various coating agents; coating papers; heat-sensitive recording papers; food containers; beverage containers; food packing materials; dental materials; lining agents; inks; resists; liquid resists; adhesives; adhesives for polarizing plates; adhesives for display films; sealing agents for liquid-crystal dropping method; printing boards; printing masks; insulating varnishes; insulating sheets; laminated plates; printed circuit boards; flexible display substrates; touch panel substrates; sealants for semiconductor devices, LED packages, liquid-crystal inlets, organic ELs, optical elements, electrical insulating materials, electronic components, electrode protection materials, separator membranes and the like; molding materials; putties; building materials; sanitary earthenwares; housing equipments and instruments, such as bathtubs; sidings; glass fiber impregnants; fillers; passivation films for semiconductor production processes, semiconductors, solar cells and the like; interlayer insulating films; protective films; prism lens sheets used in backlights of liquid-crystal displays; Fresnel lens sheets used in the screens of projection televisions and the like; lens parts of lens sheets (e.g., lenticular lens sheets) as well as backlights and the like using such sheets; protective films and spacers of liquid-crystal color filters; DNA separation chips; micro-reactors; nano-biodevices; recording materials for hard disks; solid-state image sensing devices; solar cell panels; light-emitting diodes; organic light-emitting devices; luminescent films; fluorescent films; MEMS elements; actuators; holograms; plasmon devices; alignment films; polarizing plates; polarizing films; optical lenses such as microlenses; optical elements; optical connectors; optical waveguides; and casting agents for optical modeling, and examples of a substrate to which the water-soluble composition of the present invention can be applied as a coating agent include products made of a metal, a wood material, a rubber, a plastic, a glass, a ceramic or the like.

When the water-soluble composition of the present invention is used as an optical film, the optical film may be produced by molding the water-soluble composition of the present invention into a film or a sheet by a commonly used method, with or without subsequent stretching (or an orientation treatment) of the thus obtained film or sheet. For the film molding, a melt molding method (melt film-forming method) such as extrusion molding or blow molding, or a cast molding method (a cast film-forming method or a solution casting method) may be utilized.

The shape of the optical film prepared using the water-soluble composition of the present invention is not particularly restricted; however, usually, the optical film is a film that has an optical film on a transparent support and is utilized in optical applications, and examples thereof include various functional films, such as polarizing plate protective films, retardation films and viewing angle-expanding films, which are used in liquid-crystal displays and the like, and anti-reflection films and low-reflectance films that are used in plasma displays; and various functional films that are used in organic EL displays.

The optical film of the present invention can be used as optical recording layers of write-once optical disks (e.g., CD±R, DVD±R, and next-generation high-density disks) in which the optical film is applied to a support; various lenses; optical filters for image display devices; various filters represented by color filters and color conversion filters; and protective sealing films of organic EL light-emitting devices, inorganic EL light-emitting devices, electronic paper displays and the like.

### EXAMPLES

The present invention will now be described in more detail by way of examples and the like thereof; however, the present invention is not restricted thereto. It is noted here that, in Examples and Comparative Examples, "part(s)" means "part(s) by mass".

### (Examples 1 to 36 and Comparative Examples 1 to 6)

<Step 1> Preparation of Aqueous Polyvinyl Alcohol Solutions PV-1 to PV-6

First, to 900.0 g of ion-exchanged water being stirred at room temperature, 100.0 g of each of the below-described polyvinyl alcohols was slowly added. The resultants were each stirred at room temperature for 10 minutes and subsequently heated until the inner temperature was raised from 85°C to 90°C, after which stirring was continued at this temperature for 1 hour. After confirming that each polyvinyl alcohol was dissolved, the resulting solutions were each cooled to room temperature. Thereafter, the thus prepared aqueous solutions were each filtered through a 1-µm filter. It is noted here that A-1 and A-2 are acetate group-containing polyvinyl alcohols, and A-3 to A-6 are acetoacetate group-containing polyvinyl alcohols.
A-1: GOHSENOL™ NL-05, manufactured by The Nippon Synthetic Chemical Industry Co., Ltd. (saponification degree: 99)
A-2: GOHSENOL™ GL-05, manufactured by The Nippon Synthetic Chemical Industry Co., Ltd. (saponification degree: 87)
A-3: GOHSENX™ Z-200, manufactured by The Nippon Synthetic Chemical Industry Co., Ltd. (saponification degree: 98)
A-4: GOHSENX™ Z-300, manufactured by The Nippon Synthetic Chemical Industry Co., Ltd. (saponification degree: 98)
A-5: GOHSENX™ Z-100, manufactured by The Nippon Synthetic Chemical Industry Co., Ltd. (saponification degree: 99)
A-6: GOHSENX™ Z-220, manufactured by The Nippon Synthetic Chemical Industry Co., Ltd. (saponification degree: 92)

### <Step 2> Preparation of Water-Soluble Compositions and Comparative Water-Soluble Compositions

The aqueous polyvinyl alcohol solutions prepared in the above-described step 1 were each mixed with the respective crosslinking agents (B) and organic acids (C) shown in Tables 1 to 6 below, and the resulting mixtures were each stirred at room temperature for 1 hour and subsequently filtered through a 1-µm filter, whereby water-soluble compositions of Examples and Comparative Examples were obtained. The following evaluations were performed for the thus obtained water-soluble compositions. The results thereof are also shown in Tables 1 to 7.

### (Metal Content)

A value obtained by multiplying each blended amount shown in Tables 1 to 7 by the corresponding component concentration was defined as the component amount, and the ratio thereof with respect to 100 of polyvinyl alcohol solid was indicated in percentage.

### (Solution Compatibility)

The state of each water-soluble composition was visually checked. The evaluation criteria were as follows.
○: transparent and uniform
Δ: cloudy
×: not miscible (phase separation)

### (Coatability)

### a) Preparation of Coating Film

Each water-soluble composition was coated on a glass substrate using a spin coater, and the resultant was prebaked on a 90°C hot plate for 5 minutes and subsequently heated at 140°C for 15 minutes, whereby an evaluation substrate was prepared. The spin-coating conditions were adjusted such that the resulting film thickness was measured to be 5.0 to 5.5 µm by a stylus method.

### b) State of Coating Film after Coating and Drying

For the thus obtained evaluation substrate, the surface state was visually checked and, at the same time, evaluated by haze measurement. For the measurement, a haze meter NDH5000 manufactured by Nippon Denshoku Industries Co., Ltd. was used, and the evaluation criteria were as follows.
○: The film was uniform, and the haze was less than 1.
Δ: The film was uniform, and the haze was 1 to less than 3.
×: The film remained on the entire surface, and the haze was 3 or higher.
××: The film was partially delaminated or eluted.

### c) Moist-Heat Resistance Test of Film

After leaving each substrate prepared in the above a) to stand for 100 hours under the conditions of 85°C and 85% RH, the surface state of the substrate was evaluated in the same manner as in the above b). The evaluation criteria were also the same as in the above b).

### (VHR)

Liquid-crystal compositions composed of the liquid-crystal compounds No. 1 to No. 11 shown below were each brought into contact with the respective coating films obtained in the above-described coating property test and, after leaving the resultants at 60°C for 24 hours, the liquid-crystal compositions were each removed, whereby a resin elution test was performed. For the thus removed liquid-crystal compositions, the VHR (voltage holding ratio) was compared before and after the resin elution test to determine the VHR reduction rate, which was evaluated based on the below-described criteria. For the evaluation, the liquid-crystal compositions were each injected into a TN cell for liquid-crystal evaluation (cell thickness: 5 µm, electrode area: 8 mm × 8 mm, alignment film: JALS2096), and the VHR was measured using VHR-1A (manufactured by TOYO Corporation) (Measurement conditions: pulse voltage width = 60 µs, frame period = 16.7 ms, wave height = ±5 V, and measuring temperature = 25°C).
○: The VHR was higher than 99%.
Δ: The VHR was 97 to 99%.
×: The VHR was lower than 97%.

### (Liquid Storage Stability)

The water-soluble compositions were each stored in dark at 23°C, and the viscosity was measured after 60 days and compared with the viscosity measured immediately after the preparation.
⊚: The change in viscosity was 3% or less.
○: The change in viscosity was less than 5%.
Δ: The change in viscosity was 5% or higher but less than 10%.
×: The change in viscosity was 10% or higher.

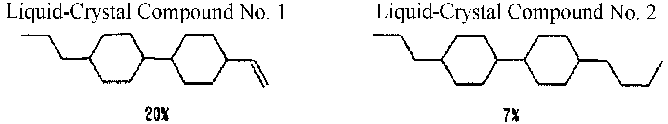

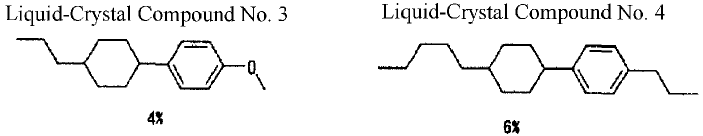

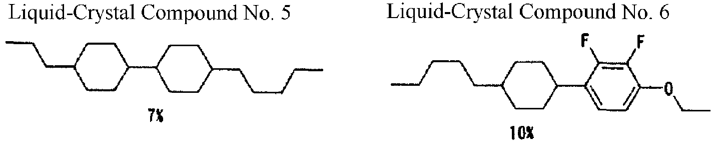

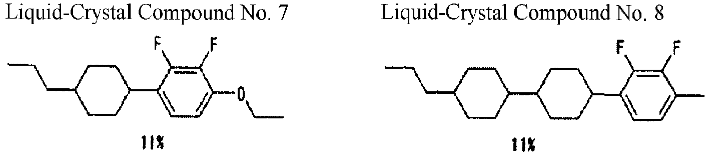

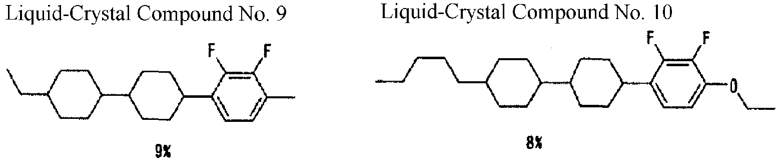

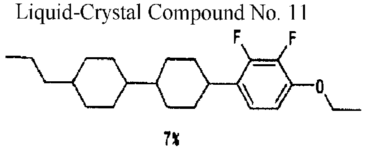

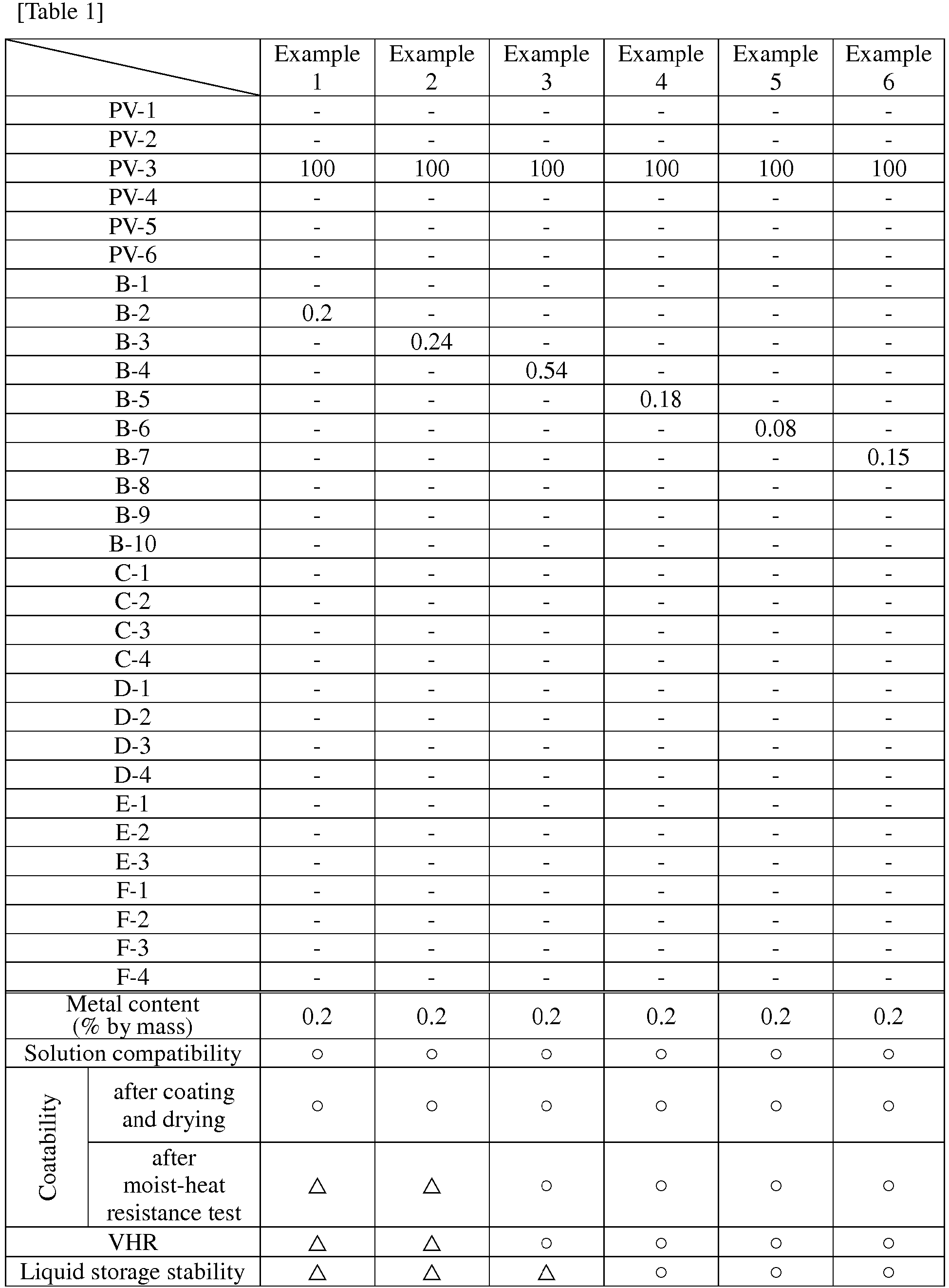

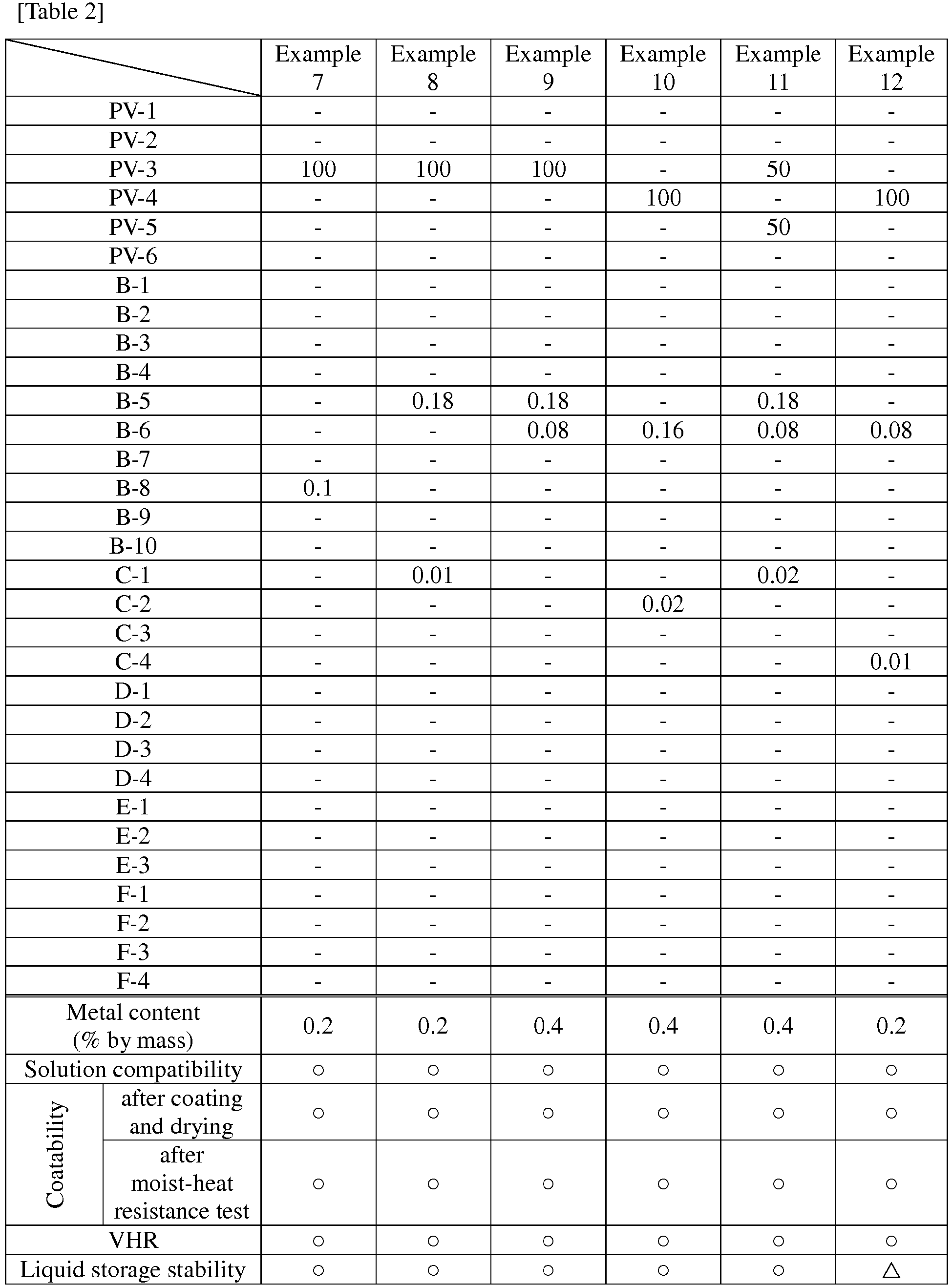

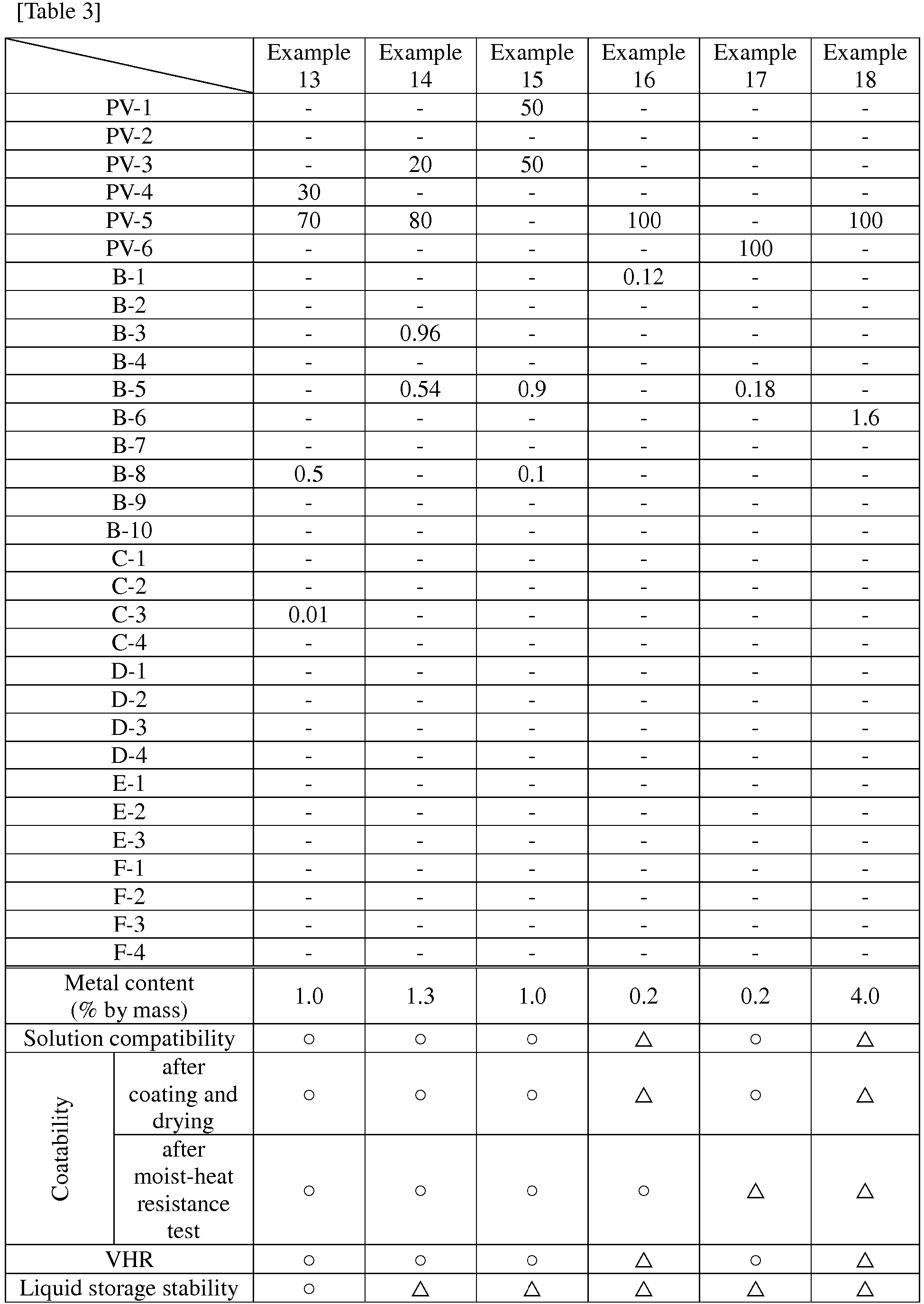

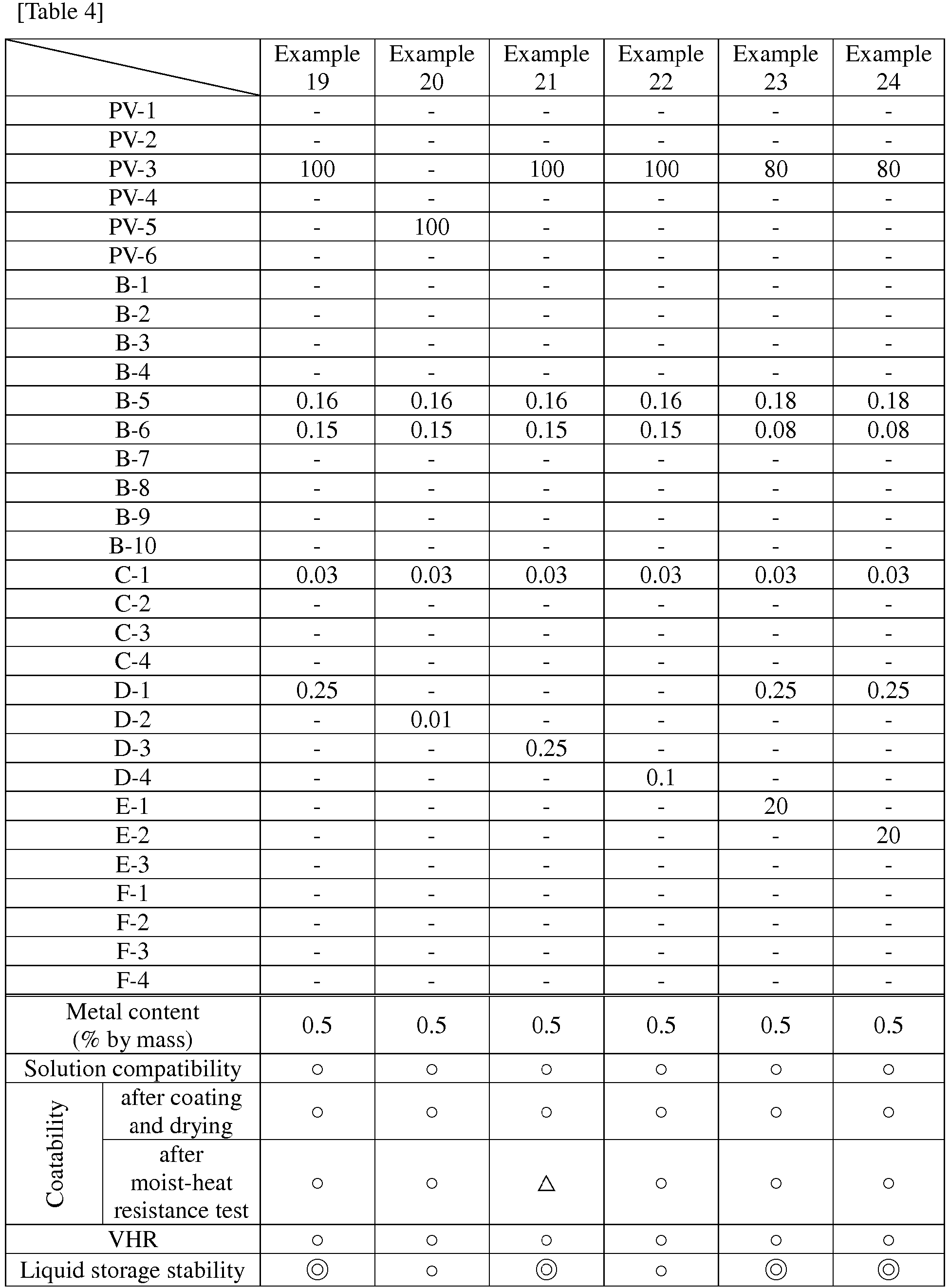

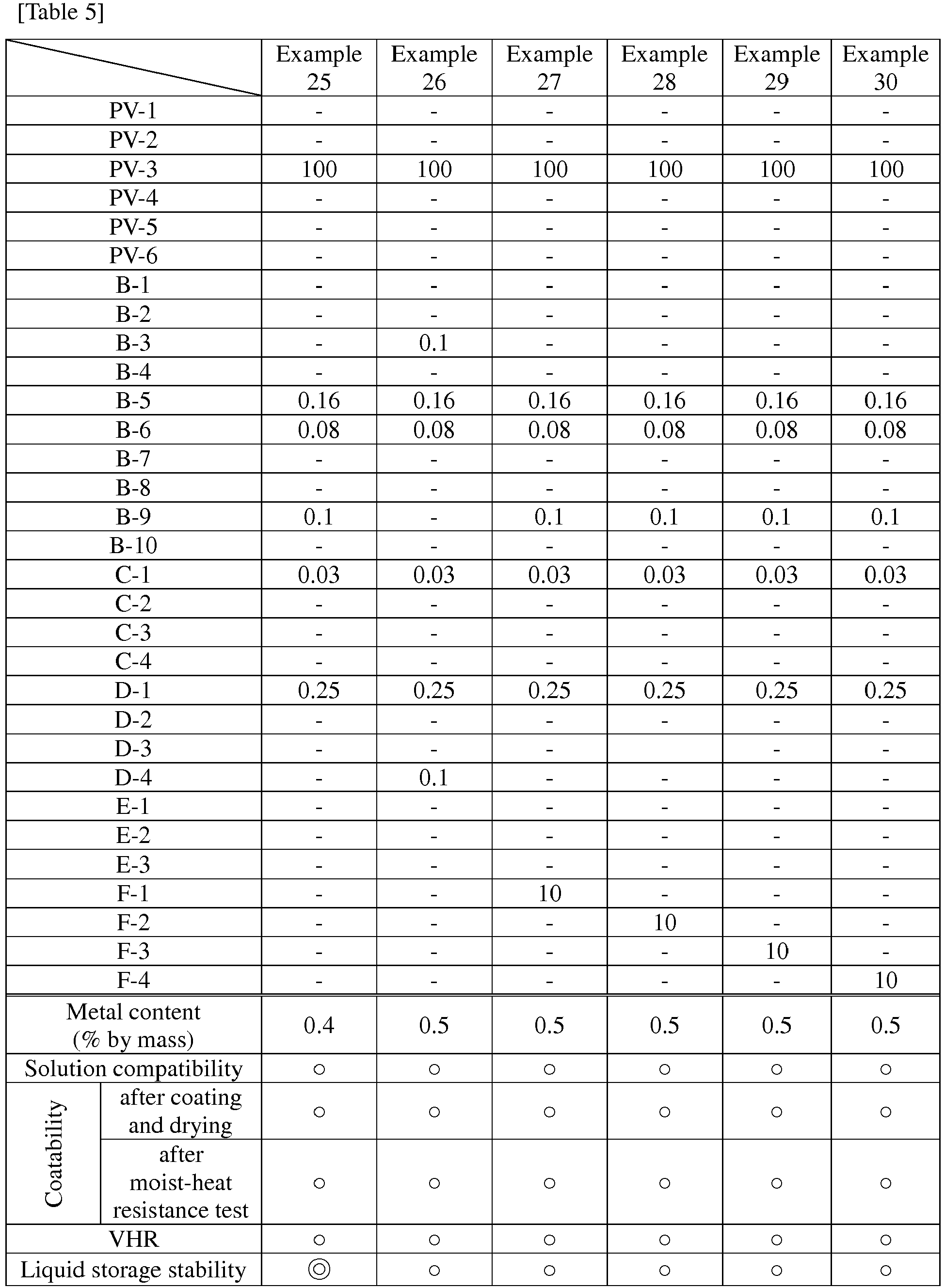

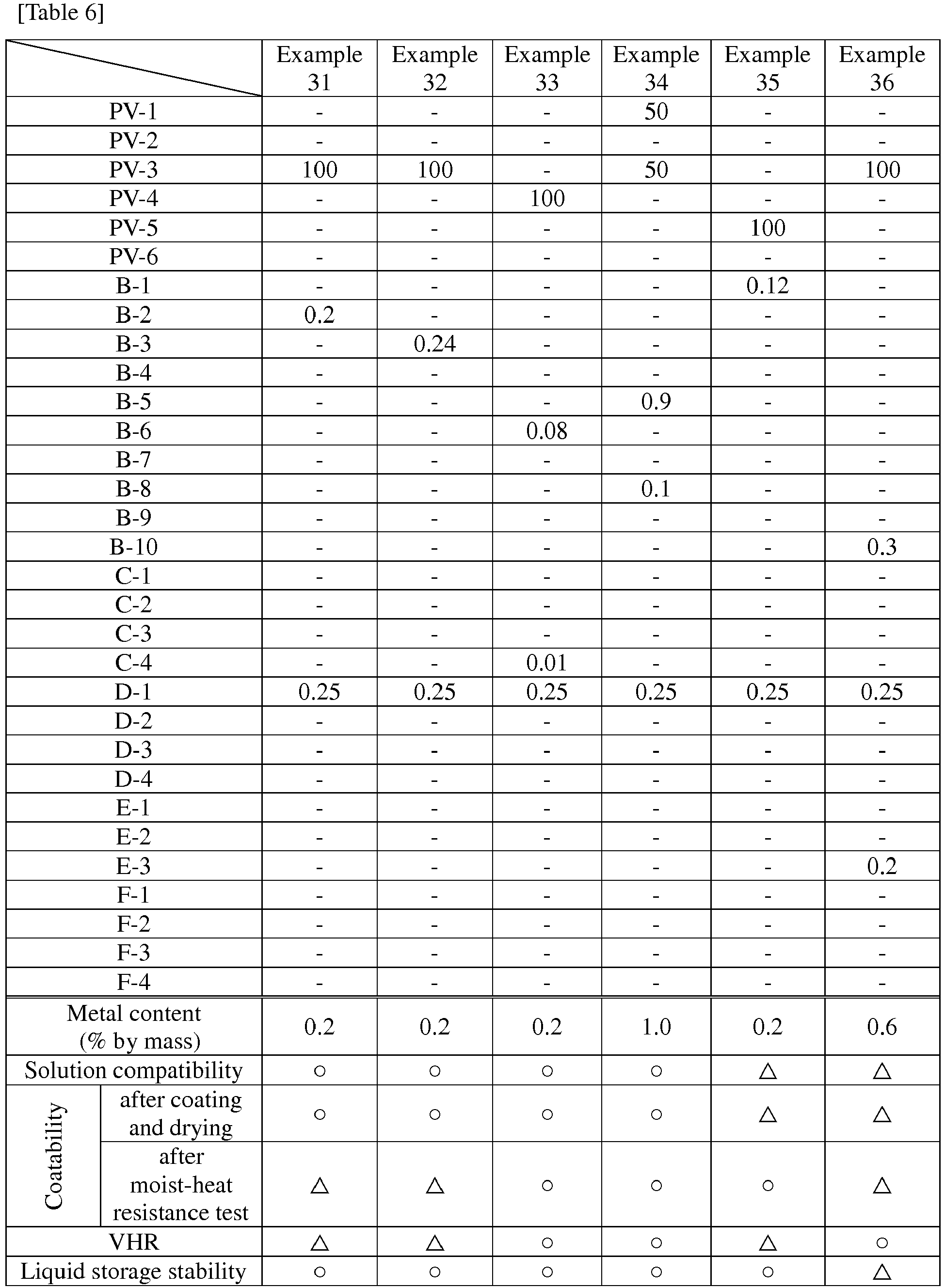

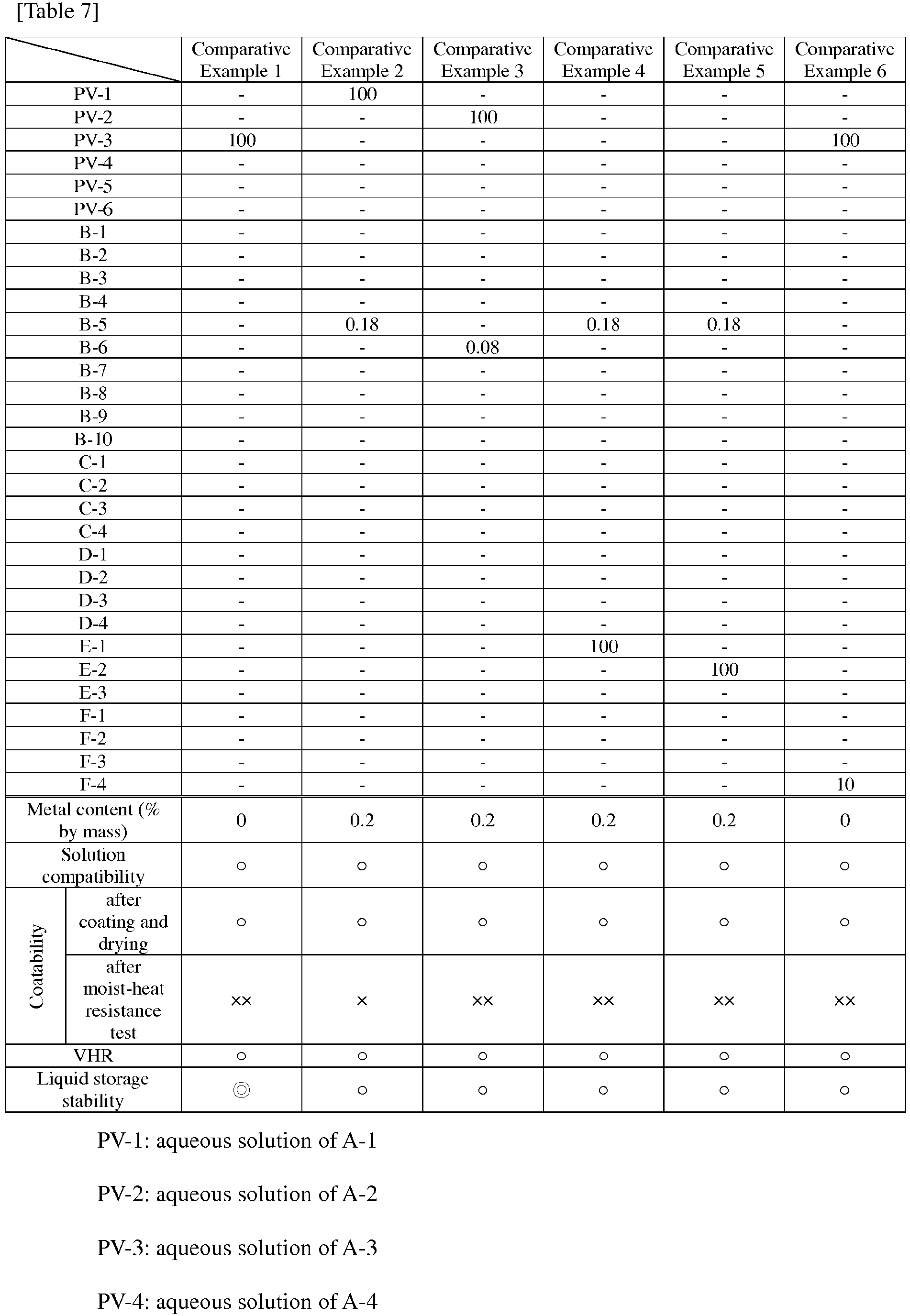

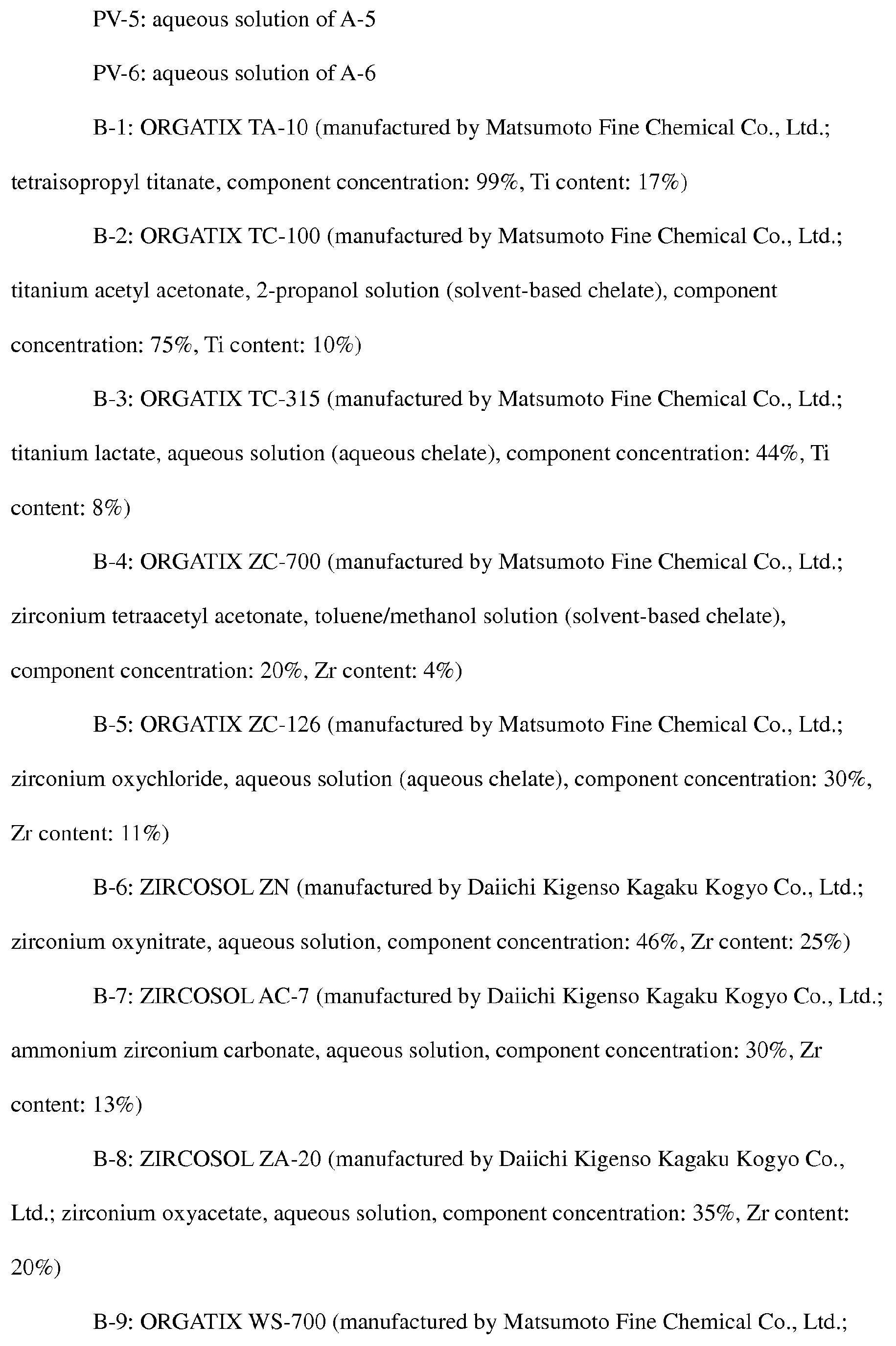

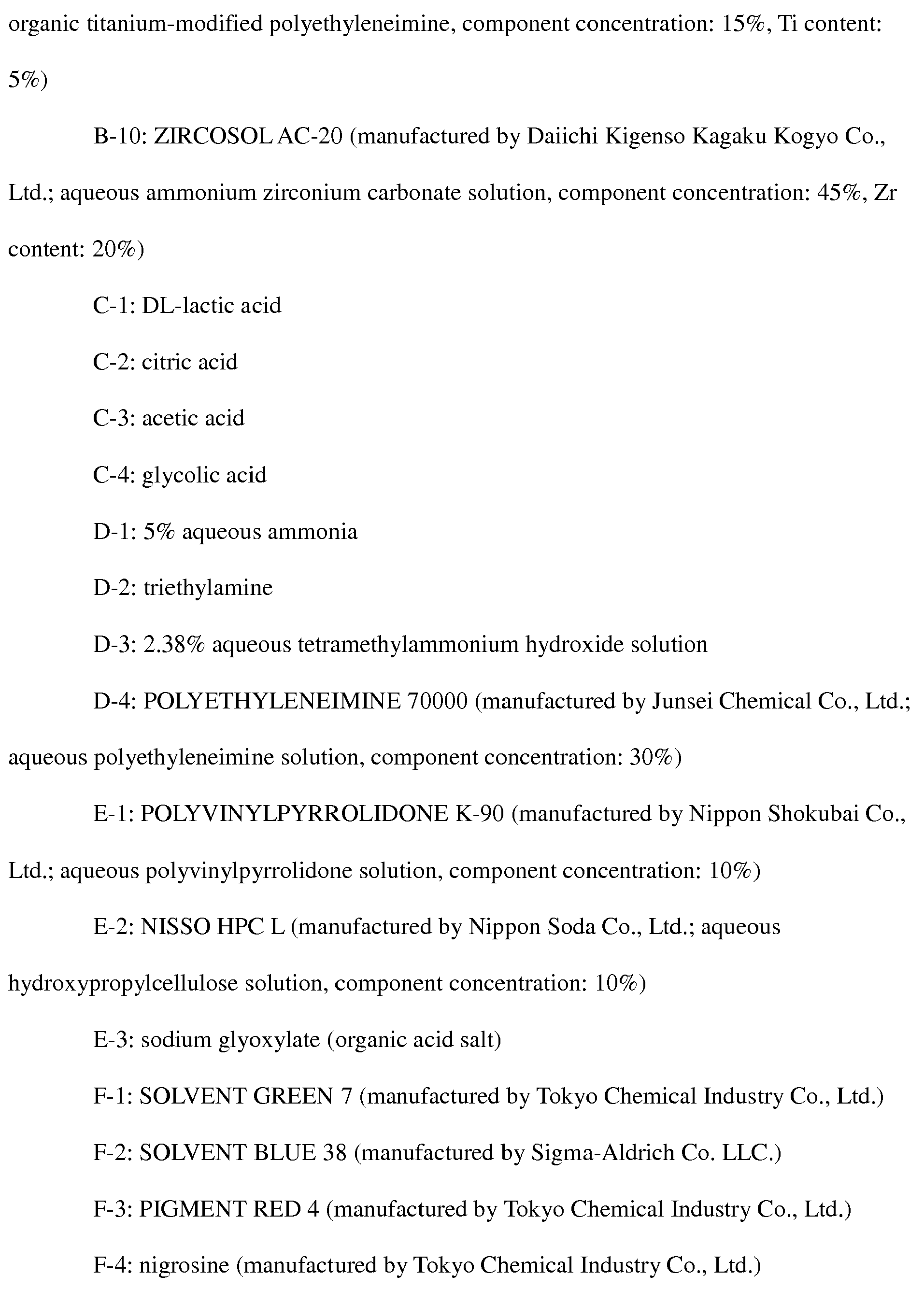

From Tables 1 to 7, it is seen that the water-soluble compositions according to the present invention had high solution compatibility and excellent coatability and exhibited low liquid-crystal contamination. Therefore, the water-soluble compositions according to the present invention can be suitably used in optical films and sealing agents for liquid-crystal dropping method.

Further, in accordance with the below-described procedures, a color fading test, a solvent wiping test and an adhesion test were performed.

### (Color Fading Test)

For the colorant-containing water-soluble compositions of Examples 27 to 30 and Comparative Example 6, a color fading test was performed by the following method. Each water-soluble composition was coated on a neutral paper at a coating thickness of about 10 µm using a bar coater, and the resultant was dried in a 100°C oven for 5 minutes and then in a 140°C oven for 30 minutes to prepare a test piece. The thus obtained test piece was immersed in ion-exchanged water at 23°C for 1 minute, and the state of the test piece was confirmed thereafter.

The test pieces obtained by coating the compositions of Examples 27 to 30 all showed no bleeding or discoloration; however, the test piece of Comparative Example 6 showed color fading. From these results, it is seen that the colorant-containing water-soluble compositions according to the present invention are suitable as coloring inks.

### (Solvent Wiping Test)

The water-soluble compositions of Example 25 and Comparative Example 2 were each coated on a PET film (COSMOSHINE® A4100, manufactured by TOYOBO Co., Ltd.) at a coating thickness of about 50 µm using a bar coater, and the resultants were dried in a 100°C oven for 5 minutes and then in a 120°C oven for 30 minutes to prepare test pieces.

When water and solvents (acetone, toluene and ethanol) were dropped onto the coated surface and subsequently wiped off using a Kimwipe, the coated surface of the film prepared by coating the water-soluble composition of Example 25 showed no change such as abrasion or bleaching; however, the coated surface of the film prepared by coating the water-soluble composition of Comparative Example 2 were lost by abrasion or showed a change such as bleaching. From these results, it is seen that the water-soluble composition according to the present invention is suitable as a coating agent of films and the like.

### (Adhesion Test)

The water-soluble compositions of Example 25 and Comparative Example 6 were each coated on a PET film (COSMOSHINE® A4100, manufactured by TOYOBO Co., Ltd.) at a coating thickness of about 50 µm using a bar coater, and the resultants were dried in a 100°C oven for 5 minutes and then in a 120°C oven for 30 minutes to prepare test pieces. For the thus obtained test pieces, a coating adhesion test was performed by a cross-cut test method.

No peeling was confirmed for the film prepared by coating the water-soluble composition of Example 25; however, the film prepared by coating the water-soluble composition of Comparative Example 6 was partially peeled off. From these results, it is seen that the water-soluble composition according to the present invention is suitable as a coating agent of films and the like.

## Claims

1. A water-soluble composition comprising:
an acetoacetate group-containing polyvinyl alcohol (A); and
at least one crosslinking agent (B) selected from the group consisting of a zirconium compound (B1) and a titanium compound (B2).

2. The water-soluble composition according to claim 1, further comprising an organic acid (C).

3. The water-soluble composition according to claim 1, wherein the polyvinyl alcohol is a homopolymer or a copolymer, which contains vinyl alcohol as an essential monomer.

4. The water-soluble composition according to claim 1, wherein the acetoacetate group-containing polyvinyl alcohol (A) has a saponification degree of 95 or higher.

5. The water-soluble composition according to claim 1, wherein the zirconium compound (B1) is water-soluble zirconium.

6. The water-soluble composition according to claim 1, wherein the zirconium compound (B1) is oxyhalogenated zirconium, zirconium oxyacetate, zirconium sulfate, or zirconium oxynitrate.

7. The water-soluble composition according to claim 2, wherein the organic acid (C) is lactic acid, acetic acid, citric acid, glycolic acid, or malic acid.

8. The water-soluble composition according to claim 1, further comprising a basic compound (D).

9. The water-soluble composition according to claim 1, wherein the metal content is 0.01 to 3% by mass in terms of solid content.

10. A cured product obtained from the water-soluble composition according to any one of claims 1 to 9.
